Europäisches Patentamt

European Patent Office

Office européen des brevets

(19)

(11) **EP 0 595 119 B1**

(12) **EUROPÄISCHE PATENTSCHRIFT**

(45) Veröffentlichungstag und Bekanntmachung des Hinweises auf die Patenterteilung:
**08.05.1996 Patentblatt 1996/19**

(51) Int Cl.6: **C08F 12/04**

(21) Anmeldenummer: **93116601.1**

(22) Anmeldetag: **14.10.1993**

(54) **Verfahren zur Herstellung einer vinylaromatischen Verbindung**

Process for preparing a vinyl aromatic compound

Procédé de préparation d'un composé vinylaromatique

(84) Benannte Vertragsstaaten:
**BE DE ES FR GB IT NL**

(30) Priorität: **24.10.1992 DE 4235980**

(43) Veröffentlichungstag der Anmeldung:
**04.05.1994 Patentblatt 1994/18**

(73) Patentinhaber: **BASF Aktiengesellschaft
D-67063 Ludwigshafen (DE)**

(72) Erfinder:
- **Brandstetter, Franz, Dr.
  D-67435 Neustadt (DE)**
- **Gausepohl, Hermann, Dr.
  D-67112 Mutterstadt (DE)**
- **Thiele, Lutz, Prof, Dr.
  D-06366 Koethen (DE)**

(56) Entgegenhaltungen:
**EP-A- 0 307 238          EP-A- 0 373 883
US-A- 4 016 348**

**Beschreibung**

Die Erfindung betrifft ein Verfahren zur Herstellung von Styrolpolymeren, insbesondere von glasklarem Polystyrol, durch kontinuierliche anionische Polymerisation, wobei das oder die Monomeren und die als Starter (Initiator) dienende metallorganische Verbindung in Lösung einem im wesentlichen rückvermischungsfrei arbeitenden Rohrreaktor zugeführt werden.

Hierzu ist auf die nachstehenden Druckschriften zu verweisen:

EP-A-176 611 US-A-3 030 346
EP-A-471 550 US-A-3 954 894
US-A-4 196 153
US-A-3 035 033 US-A-4 200 713
US-A-4 883 846 US-A-4 205 016

In der EP-A-176 611 und der US-Patentschrift 3 035 033 sind sog. Schleifenreaktoren, also Rohrreaktoren, die in sich selbst zurücklaufen zur Herstellung von anionischen Polystyrol beschrieben. Dabei wird empfohlen, daß die Verweilzeit mindestens 1 bis 3 Stunden beträgt bzw. daß das zirkulierende Volumen mindestens 15 mal und vorzugsweise mindestens 25 mal so groß ist wie das Zulaufvolumen. Ein solches Verfahren erzielt demnach nur eine geringe Raum-Zeit-Ausbeute, d.h. für eine Produktion in technischem Maßstab benötigt man einen sehr großen, aufwendigen Apparat.

In der US-Patentschrift 4 883 846 ist ein Verfahren zur anionischen Polymerisation von Styrol beschrieben, wobei Styrol in Ethylbenzol mit n-Butyllithium in einem Reaktor adiabatisch polymerisiert wird.

Der Nachteil dieses Verfahrens besteht darin, daß man nur vergleichsweise geringe Styrolkonzentrationen anwenden kann, um die Endtemperatur nicht zu hoch ansteigen zu lassen. Denn eine zu hohe Endtemperatur führt zu einem thermischen Abbruch und damit zu unvollständiger Reaktion und unkontrollierter Molekulargewichtsverteilung. Man erzielt folglich ebenfalls nur eine geringe Raum-Zeit-Ausbeute.

Aufgabe der Erfindung war es deshalb, ein wirtschaftliches Verfahren zu finden, mit den eingangs genannten Merkmalen, das sich in einer möglichst kleinen Anlage verwirklichen läßt.

Die Aufgabe wurde dadurch gelöst, daß man die Polymerisation in einem Rohrreaktor mit mindestens zwei aufeinanderfolgenden Abschnitten vornimmt, die jeweils im wesentlichen adiabatisch betrieben werden und durch jeweils einen zwischen den Abschnitten angeordneten Wärmetauscher getrennt sind.

In weiterer Ausgestaltung der Erfindung wird mindestens eine Teilmenge des Starters und in einer weiteren Ausgestaltung mindestens eine Teilmenge des oder der Monomeren einem oder mehreren dem ersten Reaktorabschnitt nachgeschalteten Reaktorabschnitten zugeführt.

Als Monomere kommen anionisch polymerisierbare, vinylaromatische Verbindungen in Betracht, wie beispielsweise Styrol, $\alpha$-Methylstyrol, Vinyltoluol oder tert.-Butylstyrol oder deren Mischungen; zur Herstellung von (Block)copolymeren können auch geeignete Diene wie Butadien oder Isopren polymerisiert werden.

Als Lösungsmittel können Kohlenwasserstoffe eingesetzt werden. Geeignete Lösungsmittel sind aliphatische, cycloaliphatische oder aromatische Kohlenwasserstoffe, die unter Reaktionsbedingungen flüssig sind und vorzugsweise 4 bis 12 Kohlenstoffatome aufweisen. Beispiele hierfür sind Pentan, Cyclohexan, Methylcyclohexan, Toluol, Ethylbenzol oder Xylol.

Geeignete Initiatoren für die Polymerisation sind die bekannten Monolithium-Kohlenwasserstoffe der allgemeinen Formel RLi, worin R einen aliphatischen, cycloaliphatischen, aromatischen oder zunächst aliphatisch-aromatischen Kohlenwasserstoffrest darstellt. Der Kohlenwasserstoffrest kann 1 bis etwa 12 Kohlenwasserstoffatome besitzen.

Als Beispiele für die erfindungsgemäßen Lithiumkohlenwasserstoffe seien genannt: Methyllithium, Ethyllithium, n- oder sec.-Butyllithium, Isopropyllithium, Cyclohexyllithium oder Phenyllithium. Besonders bevorzugt sind n-Butyl- oder sec.-Butyllithium.

Die Polymerisation erfolgt unter den für die anionische Polymerisation üblichen Bedingungen, d.h. unter Luft- und Feuchtigkeitsausschluß bei Temperaturen von bis zu 160°C, bevorzugt zwischen 40 und 120°C. Das Molekulargewicht wird über das Molverhältnis von Initiator und vinylaromatischer Verbindung eingestellt, wie allgemein bekannt.

Durch die erfindungsgemäße Art der Polymerisation können einerseits Produkte mit enger Molekulargewichtsverteilung erhalten werden, d.h. der Quotient aus Gewichts- und Zahlenmittel des Molekulargewichts liegt zwischen etwa 1 und 1,5.

Produkte mit breiterer oder auch multimodaler Verteilung erhält man durch Zwischeneinspeisung des Initiators, d. h. dadurch, daß, wie vorstehend ausgeführt (eine) Teilmenge(n) des Initiators zunächst zurückgehalten und einem nachgeschalteten Reaktorabschnitt zugeführt wird.

Die Polymerisation wird möglichst bis zu einem Umsatz über 99,9 % geführt.

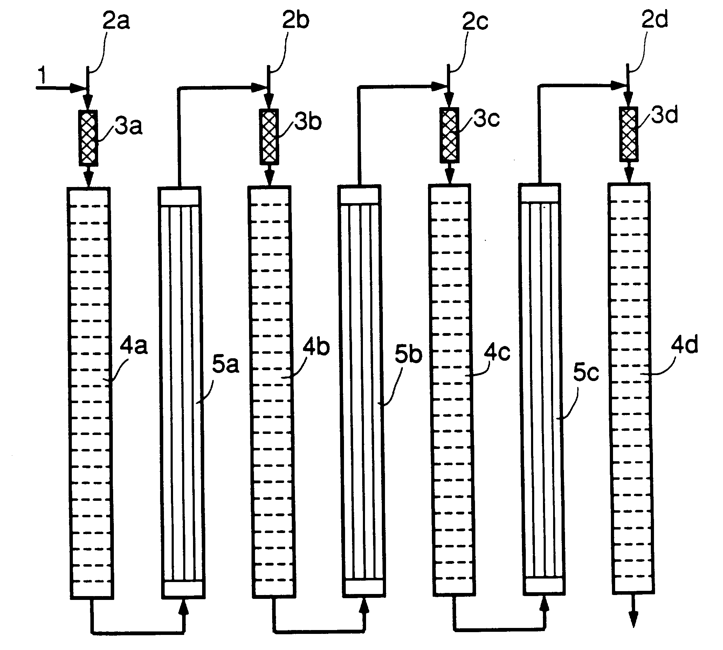

Eine Reaktionsstrecke für die Durchführung des erfindungsgemäßen Verfahrens ist schematisch in der Figur 1 wiedergegeben. Sie besteht im wesentlichen aus N Rohrreaktoren und N-1 Wärmetauschern derart, daß jedem Reaktor mit Ausnahme des letzten ein Wärmetauscher nachgeschaltet ist. Die Reaktoren können z.B. statische Mischer enthalten, um die radiale Durchmischung zu fördern. Geeignet sind sog. Kenics-Mischer oder sog. SMX-Mischer, wie sie von der Fa. Sulzer in den Handel gebracht werden (vgl. Chem.-Ing.-Techn. 52 (1980), S. 285-291). In den einzelnen Reaktoren verläuft die Umsetzung jeweils im wesentlichen adiabatisch. Die Initiatorlösung und das gesamte Lösungsmittel werden dem ersten Reaktor zugeführt; die zu polymerisierende vinylaromatische Verbindung kann derart auf die einzelnen Reaktoren aufgeteilt werden, daß die jeweils auftretende höchste Temperatur nicht höher als 80°C, vorzugsweise nicht höher als 50°C als die am jeweiligen Reaktoreingang ist.

Auf diese Weise erzielt man eine sehr hohe Raum-Zeit-Ausbeute und Produkte mit enger Molekulargewichtsverteilung. Die Molekulargewichtsverteilung der entstehenden Polymere kann überdies durch Aufteilung der Initiatormenge und den Zugabeort der einzelnen Anteile gesteuert werden. Auf die Weise kann man sowohl Produkte mit breiter als auch solche mit bi- bzw. multimodaler Verteilung erhalten.

Benutzt wurde eine Anordnung, wie sie Figur 1 wiedergibt, wobei vier Rohrreaktoren (4a, 4b, 4c, 4d) einer Länge von jeweils 10 m vorgesehen waren, wobei die Reaktoren 4a und 4b einen Durchmesser von jeweils 50 mm und die Reaktoren 4c und 4d von jeweils 62 mm halten, die durch Wärmetauscher (5a, 5b, 5c) verbunden und mit Einlässen für Monomeres bzw. Lösungsmittel (1, 2a, 2b, 2c, 2d) und jeweils einer Vormisch-Strecke (3a, 3b, 3c, 3d) versehen waren.

Beispiel 1

Herstellung eines Styrolhomopolymeren mit enger Molmasseverteilung

| 1. | Reaktor (4a) | |
|---|---|---|
| | Zulaufgemisch | 108 kg/h Cyclohexan |
| | | 355 ml/h 12 %ige Lösung von sec.-Butyllithium in Cyclohexan |
| | | 18 kg/h Styrol |
| | Eintrittstemperatur | 38°C |
| | Austrittstemperatur | 90°C |

| 2. | Reaktor (4b) | |
|---|---|---|
| | Einspeisung | 22 kg/h Styrol |
| | Eintrittstemperatur | 37°C |
| | Austrittstemperatur | 89°C |

| 3. | Reaktor | |
|---|---|---|
| | Einspeisung | 27 kg/h Styrol |
| | Eintrittstemperatur | 42°C |
| | Austrittstemperatur | 92°C |

| 4. | Reaktor (4c) | |
|---|---|---|
| | Einspeisung | 33 kg/h Styrol |
| | Eintrittstemperatur | 42°C |
| | Austrittstemperatur | 93°C |

Am Ende des Reaktors 4d betrug der Polymermassenbruch $Y_p = 0,48$. Die auf den Inhalt der gesamten Anlage bezogene Raum-Zeit-Ausbeute betrug 1000 kg Polymeres pro $m^3$ und h. Der massenmittlere Polymerisationsgrad des Endproduktes betrug $\overline{P}_w = 2050$. Die Polydispersität (Uneinheitlichkeit) $\overline{P}_w/\overline{P}_n$ war 1,1.

Beispiel 2

Herstellung eines Styrolhomopolymeren, dessen Molmasseverteilung drei diskrete Maxima aufweist

1. Reaktor

Zulaufgemisch      107 kg/h Methylcyclohexan

    85 ml/h 12 %ige Lösung von Butyllithium

    9 kg/h Styrol

Eintrittstemperatur    65°C
Austrittstemperatur    90°C

| 2. | Reaktor | |
|---|---|---|
| | Einspeisung | 23 kg/h Styrol |
| | | 170 ml/h 12 %ige Lösung von Butyllithium |
| | Eintrittstemperatur | 36°C |
| | Austrittstemperatur | 89°C |

| 3. | Reaktor | |
|---|---|---|
| | Einspeisung | 27 kg/h Styrol |
| | Eintrittstemperatur | 40°C |
| | Austrittstemperatur | 91°C |

| 4. | Reaktor | |
|---|---|---|
| | Einspeisung | 33 kg/h Styrol |
| | | 100 ml/h 12 %ige Lösung von Butyllithium |
| | Eintrittstemperatur | 55°C |
| | Austrittstemperatur | 95°C |

Die Molmasseverteilung des Endproduktes weist drei Maxima auf:

1. Peak $\overline{P}$ = 650,10 % des Produktes
2. Peak $\overline{P}$ = 2100,5 % des Produktes
3. Peak $\overline{P}$ = 3950,36 % des Produktes

Die Raumzeitausbeute betrug 920 kg/m$^3$/h.

Beispiel 3

Herstellung eines SBS-Blockcopolymeren

| 1. | Reaktor | |
|---|---|---|
| | Zulaufgemisch | 108 kg/h Methylcyclohexan |
| | | 350 ml/h 12 %ige Lösung von Butyllithium |
| | | 18 kg/h Styrol |
| | Eintrittstemperatur | 38°C |
| | Austrittstemperatur | 92°C |

| 2. | Reaktor | |
|---|---|---|
| | Einspeisung | 1 kg/h Butadien |
| | Eintrittstemperatur | 67°C |
| | Austrittstemperatur | 119°C |

| 3. | Reaktor | |
|---|---|---|
| | Einspeisung | 13 kg/h Butadien |
| | Eintrittstemperatur | 66°C |
| | Austrittstemperatur | 121°C |

| 4. | Reaktor | |
|---|---|---|
| | Einspeisung | 19 kg/h Styrol |
| | Eintrittstemperatur | 41°C |
| | Austrittstemperatur | 87°C |

Die Raum-Zeit-Ausbeute betrug 620 kg/m$^3$/h.

Beispiel 4

Herstellung eines SB-Copolymeren mit enger Molmasseverteilung

| 1. | Reaktor | |
|---|---|---|
| | Zulaufgemisch | 125 kg/h Methylcyclohexan mit 1 % THF |
| | | 270 ml/h 12 %ige Lösung von Butyllithium |
| | | 13 kg/h Monomergemisch (Styrol) und |
| | Eintrittstemperatur | 49°C |
| | Austrittstemperatur | 84°C |

| 2. | Reaktor | |
|---|---|---|
| | Einspeisung | 16 kg/h Monomergemisch |
| | Eintrittstemperatur | 43°C |
| | Austrittstemperatur | 80°C |

| 3. | Reaktor | |
|---|---|---|
| | Einspeisung | 19 kg/h Monomergemisch |
| | Eintrittstemperatur | 48°C |
| | Austrittstemperatur | 88°C |

| 4. | Reaktor | |
|---|---|---|
| | Einspeisung | 21 kg/h Monomergemisch |
| | Eintrittstemperatur | 48°C |
| | Austrittstemperatur | 88°C |

Die den 4. Reaktor verlassende Polymerlösung weist einen Polymermassenbruch von $Y_p = 0,36$ auf. Der massenmittlere Polymerisationsgrad des Endproduktes beträgt $P_w = 2100$. Die Polydispersität der Molmasseverteilung $P_w/P_n$ ist 1,2.

Beispiel 5

Herstellung eines Styrolhomopolymeren mit breiter Molmasseverteilung

| 1. | Reaktor | |
|---|---|---|

Fortsetzung der Tabelle auf der nächsten Seite

(fortgesetzt)

| | Zulaufgemisch | 108 kg/h Cyclohexan |
|---|---|---|
| | | 340 ml/h 12 %ige Lösung von Butyllithium |
| | | 22 kg/h Styrol |
| | Eintrittstemperatur | 40°C |
| | Austrittstemperatur | 99°C |

| 2. | Reaktor | |
|---|---|---|
| | Einspeisung | 26 kg/h Styrol |
| | | 40 ml/h 12 %ige Lösung von Butyllithium |
| | Eintrittstemperatur | 42°C |
| | Austrittstemperatur | 100°C |

| 3. | Reaktor | |
|---|---|---|
| | Einspeisung | 31 kg/h Styrol |
| | Eintrittstemperatur | 40°C |
| | Austrittstemperatur | 100°C |

| 4. | Reaktor | |
|---|---|---|
| | Einspeisung | 38 kg/h Styrol |
| | Eintrittstemperatur | 47°C |
| | Austrittstemperatur | 106°C |

Das Endprodukt hat einen massenmittleren Polymerisationsgrad von $\bar{P}_w$ von 2450 und eine Polydispersität der Molmasseverteilung $\bar{P}_w/\bar{P}_n$ von 2,1.

**Patentansprüche**

1. Verfahren zur Herstellung von Styrolpolymeren durch kontinuierliche anionische Polymerisation, wobei das oder die Monomeren und die als Starter (Initiator) dienende metallorganische Verbindung in Lösung einem im wesentlichen rückvermischungsfrei arbeitenden Rohrreaktor zugeführt und bis zum Verbrauch des Monomeren im Reaktor belassen werden, dadurch gekennzeichnet, daß man die Polymerisation in mindestens zwei aufeinanderfolgenden, jeweils im wesentlichen adiabatisch betriebenen Rohrreaktorabschnitten mit jeweils mindestens einem zwischen den Abschnitten angeordneten Wärmetauscher vornimmt.

2. Verfahren nach Anspruch 1, dadurch gekennzeichnet, daß man eine Teilmenge des Starters mindestens einem dem ersten Reaktor nachgeschalteten Reaktor zuführt.

3. Verfahren nach Anspruch 1, dadurch gekennzeichnet, daß man vor mindestens einem weiteren Rohrreaktorabschnitt erneut Monomeres einspeist.

**Claims**

1. A process for preparing styrene polymers by continuous anionic polymerization, the monomer or monomers and the organometallic compound serving as starter (initiator) being added in solution to a tubular reactor operating essentially without backmixing and being left in the reactor until the monomer has been consumed, characterized in that the polymerization is carried out in at least two successive tubular reactor sections operating in each case essentially adiabatically, with in each case at least one heat exchanger arranged between the sections.

2. A process as claimed in claim 1, characterized in that a proportion of the starter is added to at least one reactor connected downstream of the first reactor.

3. A process as claimed in claim 1, characterized in that further monomer is fed in upstream of at least one further tubular reactor section.

**Revendications**

1. Procédé pour la préparation de polymères de styrène par polymérisation anionique continue, pendant lequel le ou les monomères et le composé organo-métallique en solution servant d'amorceur (initiateur) sont introduits dans un réacteur tubulaire travaillant de manière essentiellement sans remélange et sont laissés dans le réacteur jusqu'à la consommation du monomère, caractérisé en ce que la polymérisation est effectuée dans au moins deux sections de réacteur tubulaire successives, opérées respectivement de manière essentiellement adiabatique avec respectivement au moins un échangeur calorifique disposé entre les sections.

2. Procédé selon la revendication 1, caractérisé en ce qu'on introduit une quantité partielle de l'initiateur à au moins un réacteur en aval du premier réacteur.

3. Procédé selon la revendication 1, caractérisé en ce qu'on injecte le monomère de nouveau avant au moins une section supplémentaire du réacteur tubulaire.